# EUROPÄISCHE PATENTANMELDUNG

(11) **EP 3 352 334 A1**
(43) Veröffentlichungstag der Anmeldung: **25.07.2018**
(21) Anmeldenummer: 17151989.5
(22) Anmeldetag: 18.01.2017
(51) Int. Cl.: H02K 1/18, H02K 7/18

(54) **TRAGSTRUKTUR EINES BLECHPAKETS EINES STATORSEGMENTS**

(71) Anmelder: Siemens Aktiengesellschaft, 80333 München (DE)
(72) Erfinder: Jöckel, Andreas, 90408 Nürnberg (DE); Lindmeier, Andreas, 94099 Ruhstorf (DE); Schober, Franz Xaver Michael, 94154 Neukirchen v. Wald (DE); Seil, Andreas, 94167 Tettenweis (DE)

(57) **Zusammenfassung**

Die Erfindung betrifft eine Tragstruktur (17) eines Blechpakets (9) eines Statorsegments (13) einer dynamoelektrischen Maschine mit Außenläufer mit
- zwei Teilfugenplatten (5) und zwei gekrümmt ausgeführten Druckplatten (1), die sich jeweils mit ihren Längsseiten gegenüber liegen, einen vorgebbaren Raum umgreifen und an ihren Stosskanten verbindbar sind,
- im Wesentlichen radialen ausgerichteten Leisten bzw. Rippen (3) zwischen den Druckplatten (1),
- zumindest einem Element mit polygonförmigen Ausnehmungen, das mit einer Längsseite der Rippen (3) verbunden ist und eine Basisplatte der Tragstruktur (17) bildet.

## Beschreibung

Die Erfindung betrifft eine Tragstruktur eines Blechpakets, eines Statorsegments, eines Außenläufergenerators, ein Statorsegment, einen Stator, einen Außenläufergenerator, eine Windkraftanlage als auch die Herstellverfahren eines Statorsegments bzw. eines Stators.

Bei sehr großen dynamoelektrischen Maschinen, insbesondere langsam laufenden Torque-Motoren und Generatoren ist es von Vorteil, dass Blechpakete des Stators nicht als Ganzes zu fertigen. Deshalb wird das Blechpaket des Stators mit Wicklungen in segmentierter Bauweise, d.h. in Segmenten aufgebaut, die später zu einem geschlossenen Ring dem Stator montiert werden.

Bei großen direkt angetriebenen Windkraftgeneratoren mit Außenläufer erfolgt der Einbau der einzelnen Statorsegmente mittels Verschraubung dieser Statorsegmente an Flanschen, die mit dem Maschinenbauraumen der Gondel der Windkraftanlage verbunden sind. Eine segmentierte Bauweise bei Statoren mit Innenläufern ist beispielsweise aus der US 2012/0133145 oder auch aus der WO 2014/000757 A1 bekannt.

Nachteilig bei diesen Ausführungen ist jedoch der enorme mechanische Aufwand, um eine stabile Fixierung der Statorsegmente und des Stators in der Gondel zu erreichen. Nachdem eine ausreichende Fixierung nur mit dementsprechenden mechanischen Aufwand und damit zusätzlichem Gewicht verbunden ist, ist dies insbesondere in den Gondeln von Windkraftanlagen nachteilig.

Ausgehend davon liegt der Erfindung die Aufgabe zugrunde, eine Tragstruktur für die Statorsegmente eines Stator zu schaffen, die besonders leicht und dennoch die im Betrieb der Windkraftanlage auftretenden Kräfte beherrscht und aufnehmen kann.

Die Lösung der gestellten Aufgabe gelingt durch eine Tragstruktur eines Blechpakets eines Statorsegments einer dynamoelektrischen Maschine mit Außenläufer mit
- zwei Teilfugenplatten und zwei gekrümmt ausgeführten Druckplatten, die sich jeweils mit ihren Längsseiten gegenüber liegen, einen vorgebbaren Raum umgreifen und an ihren Stoßkanten verbindbar sind,
- im Wesentlichen radialen ausgerichteten Leisten bzw. Rippen zwischen den Druckplatten,
- zumindest einem Element mit polygonförmigen Ausnehmungen, das mit einer Längsseite der Rippen verbunden ist und eine Basisplatte der Tragstruktur bildet.

Die Lösung der gestellten Aufgabe gelingt ebenfalls durch ein Statorsegment mit einer erfindungsgemäßen Tragstruktur, wobei die Druckplatten zusammen mit radial angeordneten Druckfingern an den Stirnseiten eines Blechpakets dieses Blechpaket axial fixieren. Damit ist das Blechpaket unabhängig davon, ob es einstückig ausgebildet oder aus axial voneinander beabstandeten Teilblechpaketen zusammengesetzt einen stabilen Verband.

Die Lösung der gestellten Aufgabe gelingt ebenfalls durch ein Statorsegment einer dynamoelektrischen Maschine mit einer erfindungsgemäßen Tragstruktur wobei eine axiale Fixierung des Blechpakets durch Druckplatten und durch eine Verklebung der letzten bzw. ersten Bleche des Blechpakets durch Backlack erfolgt. Auch damit ist das Blechpaket unabhängig davon, ob es einstückig ausgebildet oder aus axial voneinander beabstandeten Teilblechpaketen zusammengesetzt einen stabilen Verband. Dabei können sowohl die jeweiligen Bleche der Teilblechpakete oder auch die Bleche des Gesamtpakets verklebt sein.

Die Lösung der gestellten Aufgabe gelingt ebenfalls durch einen Stator mit erfindungsgemäßen Statorsegmenten, wobei die Statorsegmente in Umfangsrichtung betrachtet mechanisch zumindest mit benachbart anordenbaren Teilfugenplatten eines weiteren Statorsegments verbunden sind.

Eine zusätzliche Fixierung der Statorsegmente an einer radial innenliegenden Stützstruktur mittels einer form- oder stoffschlüssigen Verbindung führt zu einer weiteren Versteifung des gesamten Stators.

Die Lösung der gestellten Aufgabe gelingt ebenfalls durch einen Außenläufergenerator mit einem erfindungsgemäßen Stator, der in geeigneter Art und Weise mit einem Maschinenhausrahmen der Windkraftanlage verwindungssteif verbunden ist, der wiederrum die Gondel der Windkraftanlage trägt.

Die Lösung der gestellten Aufgabe gelingt ebenfalls durch eine Windkraftanlage mit einem derartigen Außenläufergenerator, wobei dadurch bei vergleichsweise geringem Gewicht des Stators und damit der Gondel u.a. die Montage der gesamten Windkraftanlage vereinfacht wird.

Die Lösung der gestellten Aufgabe gelingt ebenfalls durch ein Herstellverfahren eines erfindungsgemäßen Statorsegments durch folgende Schritte:
- Bereitstellen einer Tragstruktur, die Teilfugenplatten, Leisten und Druckplatten aufweist, die auf einer Längsseite der Leisten durch ein polygonförmiges Element, insbesondere ein Netzblech miteinander verbunden werden,
- anordnen eines vorpaketierten Blechpakets des Statorsegments auf der Tragstruktur auf der dem Netzblech abgewandten Seite der Leisten,
- Einsetzen eines Wicklungssystems, insbesondere Spulenwicklungssystems in die Nuten des Blechpakets des Statorsegments.

Die Lösung der gestellten Aufgabe gelingt ebenfalls durch ein Herstellverfahren eines erfindungsgemäßen Stators durch folgende Schritte:
- Zusammensetzen einzelner Statorsegmente, indem die Statorsegmente über ihre Teilfugenbleche und/oder durch eine über die Statorsegmente ersteckende Stützstruktur miteinander verbunden werden,
- elektrische Kontaktierung eines Wicklungssystems der einzelnen Spulen der Statorsegmente untereinander und mit zumindest einem Umrichter.

Erfindungsgemäß weist nunmehr die Tragstruktur nur noch die notwendigen mechanischen Teile auf, um eine ausreichende Fixierung und Stabilisierung der Statorsegmente und des Stators und somit letztendlich des gesamten Außenläufergenerators zu erhalten, um die im Betrieb der Windkraftanlage u.a. auftretenden Kräfte aufnehmen zu können.

Ebenso kann durch diese Ausbildung der Tragstruktur eine hohe Genauigkeit bei der Luftspaltkontur des Außenläufergenerators gewährleistet werden. Der Luftspalt zwischen dem Rotor des Außenläufergenerators und dem Stator lässt sich durch diesen Aufbau genauer und nachhaltiger einstellen.

Durch das Element mit polygonförmigen Ausnehmungen, das auf der radial innenliegenden Seite der Tragstruktur und die einzelnen Leisten und/oder die Druckplatten und/oder die Teilfugenplatten, insbesondere durch Schweißverbindungen miteinander fixiert, ist nunmehr die Tragstruktur aus relativ einfachen Grundelementen aufgebaut. Sie bildet somit zusammen mit dem Blechpaket eine selbsttragende vergleichsweise leichte Sandwich-Konstruktion.

Das Element stellt somit eine Art Basisplatte der Tragstruktur dar.

Der umgriffene Raum von Teilfugenplatten und Druckplatten ist auf der konkaven Seite durch das Element und auf der konvexen Seite durch das Blechpaket eingenommen.

Dabei werden vor allem die tragenden Eigenschaften des Blechpakets, das von der konvexen Seite auf die Tragstruktur aufgesetzt und verschweißt wird, in die Tragstruktur integriert. Somit übernimmt das Blechpaket des Statorsegments nicht nur eine elektromagnetische Funktion zur Bildung und Führung des elektromagnetischen Feldes sondern auch gleichzeitig eine mechanische Tragfunktion.

Das Element, insbesondere ein Netzblech wird an dem konkaven Teil der Tragstruktur positioniert und fixiert. Das Blechpaket wird dabei auf den konvexen Teil der Tragstruktur positioniert und fixiert.

Vorteilhafterweise wird damit die geforderte Steifigkeit eines Statorsegments bei einem Minimum an Material und Wandstärke erreicht, was wiederum die Voraussetzung für ein vergleichsweise geringes Gewicht und niedrige Kosten darstellt. Das geringe Gewicht ist insbesondere beim Transport der Statorsegmente, der Montage des Stators in einer Gondel einer Windkraftanlage besonders vorteilhaft.

Bisher bekannte Tangentialrippen in Statorsegmenten bzw. im Stator lassen sich somit komplett eliminieren. Dies schafft neben der Gewichtsersparnis eine fertigungsgerechtere einfachere Ausführung möglichst aller Schweißnähte durch eine vergleichsweise bessere Zugänglichkeit der vorgegebenen Schweißpunkte in der Tragstruktur.

Vorteilhafterweise ist das Element aus nicht magnetischem Blech, das auf der radial innenliegenden Seite der Tragstruktur also der konkaven Seite vorgesehen ist und die einzelnen Leistenelemente und/oder die Druckplatten und/oder die Teilfugenplatten insbesondere durch Schweißverbindungen miteinander fixiert. Damit ist nunmehr die Tragstruktur aus relativ einfachen Grundelementen aufgebaut und bildet somit zusammen mit dem Blechpaket eines Statorsegments eine selbsttragende Sandwich-Konstruktion.

Die Ausnehmungen des Elements bzw. des Blechs sind rundlich oder eckenförmig ausgestaltet. Das Blech bildet somit ein Netzblech. Damit wird das Gewicht weiter reduziert, ohne die damit verbundenen Steifigkeit in der relevanten Ebene des Elements bzw. Blechs zu beeinträchtigen.

Vorteilhafterweise wird das Netzblech dabei so ausgeführt, dass die Maschenweite in Richtung der Krümmung der Tragstruktur, welche Krümmung durch die gekrümmtem Druckplatten vorgegeben ist, dem Abstand der Leisten bzw. Rippen entspricht oder dass die Maschenweite in Richtung der Krümmung einem ganzzahligen Vielfachen des Abstands der Leistenelemente entspricht. Damit wird das Gewicht weiter optimiert.

Die Maschen werden vorteilhafterweise durch parallel und senkrecht zu den Leisten bzw. Rippen verlaufende Stegen gebildet. Dabei werden die Stege in Richtung der Leisten mit diesen an ihren langen Schmalseiten zumindest abschnittweise verschweißt. Um dabei ausreichende Schweißpunkte setzen zu können, sind zumindest an den Schweißpunkten die Stege mindesten zweimal so breit wie die dort vorhandene Breite der Leiste. D.h. die Leisten können in Ihrem Verlauf von einer Druckplatte zu anderen geschwungen ausgeführt sein, insbesondere so, dass unterschiedliche Dicken der Leisten in Höhe und oder Breite vorliegen. Das führt zu einer weiteren Gewichtersparnis ohne die mechanische Festigkeit der Tragstruktur zu beeinträchtigen.

Durch das Netzblech an der konkaven Seite der Tragstruktur und dem Blechpaket an der konvexen Seite der Tragstruktur wird zusammen mit den Druckplatten und Druckfingern also auch den Teilfugenplatten eine ausreichende Positionierung und Fixierung der Statorsegmente gewährleistet. Damit lässt sich der Luftspalt des Außenläufergenerators sehr genau einstellen.

Teilfugenplatte, Druckplatte und Netzblech sind vorzugsweise aus handelsüblichen Stahlsorten, was die Materialkosten einer derartigen Tragstruktur weiter reduziert und die Verarbeitung erleichtert.

Die Erfindung sowie weitere vorteilhafte Ausgestaltungen der Erfindung werden anhand prinzipiell dargestellter Ausführungsbeispiele näher erläutert; darin zeigen:
- FIG 1: eine perspektivische Darstellung einer Tragstruktur,
- FIG 2: eine perspektivische Darstellung einer weiteren Tragstruktur,
- FIG 3: einen Querschnitt eines Statorsegment ohne Wicklungen,
- FIG 4: eine weitere Darstellung eines Statorsegments,
- FIG 5: eine Tragstruktur mit einstückigem Blechpaket,
- FIG 6: eine Tragstruktur mit versetzt angeordnetem Netzblech,
- FIG 7: einen prinzipiellen Längsschnitt durch einen Außenläufergenerators einer direkt angetriebenen Windkraftanlage.

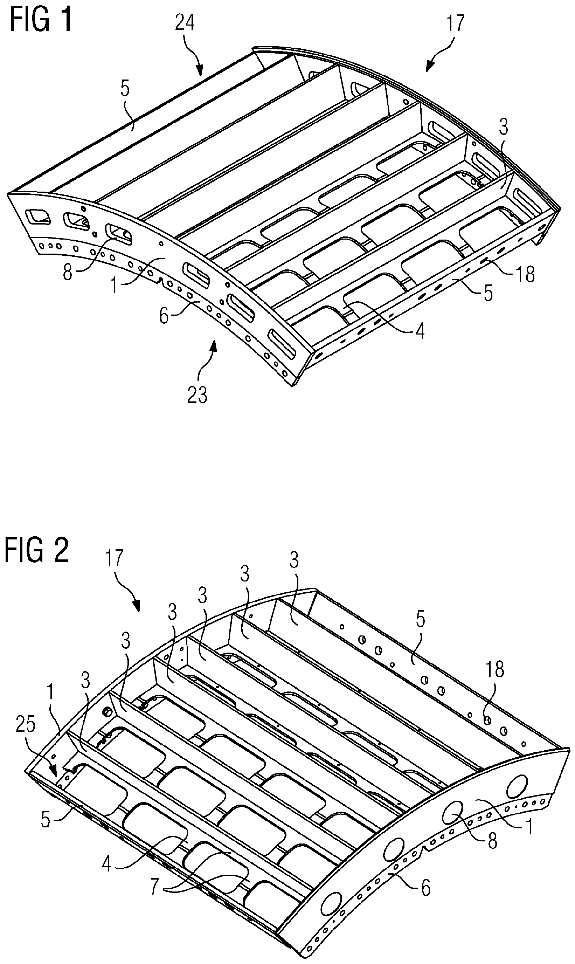

FIG 1 zeigt eine Tragstruktur 17, die im weiteren Herstellungsverlauf die Basis eines Statorsegments 13 eines Stators 12 eines direkt angetriebenen Außenläufergenerators einer Windkraftanlage bildet.

Diese Tragstruktur 17 ist gekrümmt ausgeführt und weist Teilfugenplatten 5 auf, die im eingebauten Zustand der Statorsegmente 13 einen mechanischen Kontakt zu in Umfangsrichtung direkt benachbarten weiteren Statorsegmenten 13 herstellen. Die Tragstruktur 17 weist einen konkaven Teil 23 und einen konvexen Teil 24 auf. An den Stirnseiten der Tragstruktur 17 befinden sich Druckplatten 1, vorzugsweise mit Öffnungen 8, durch die im Betrieb der Windkraftanlage Kühlluft zur Kühlung des Blechpakets 9 des Stators 12 zugeführt oder abgeführt werden kann.

In einer anderen Ausführform sind die Druckplatten 1 geschlossen, d.h. sie sind ohne Öffnungen 8 ausgeführt. Damit ist die Tragstruktur 17 lediglich oben und unten mehr oder weniger offen ausgeführt. In einer Tangentialebene betrachtet ist die Tragstruktur 17 somit geschlossen.

Radial weiter innen sind auf der konkaven Seite der Tragstruktur 17 Flansche 6 der Druckplatte 1 vorgesehen, die eine Anbindung an weitere Befestigungsvorrichtungen z.B. einer Lagereinheit 16 der direkt angetriebenen Windkraftanlage ermöglichen.

Zwischen den Druckplatten 1 verlaufen im Wesentlichen radial ausgerichtete Leistenelemente, Leisten oder Rippen 3, die mit einem Netzblech 4 stoffschlüssig, insbesondere durch Verschweißung verbunden sind. Dabei entspricht in diesem Fall der Abstand der zwischen den Druckplatten 1 verlaufenden Stege 7 des Netzbleches 4, also die Maschenweite, dem Abstand der Rippen 3. Die Stege 7 sind dabei mindestens zweimal so breit, wie die Leistenelemente bzw. Rippen 3 an ihrer Verbindungsstelle mit den Rippen 3. Diese Voraussetzung ist vor allem bei variierenden Dicken von Leisten 3 und/oder den Stegen 7 wichtig, um eine stoffschlüssige Verbindung von Steg 7 und Rippe 3 zu gewährleisten.

Die Leisten bzw. Rippen 3 verlaufen vorzugsweise auf bzw. an den Stegen 7, um grundsätzlich eine punkt- oder linienförmige Verschweißung von Rippen 3 und Stegen 7 des Netzbleches 4 an diesen Stegen 7 zu ermöglichen.

FIG 2 zeigt in einer perspektivischen Darstellung eine weitere, ähnliche Ausführung der Tragstruktur 17, wobei die Teilfugenbleche 5 Befestigungsöffnungen 18 aufweisen, um mit weiteren Teilfugenblechen 5 benachbarter Statorsegmente 13 mechanisch verbunden zu werden. Ebenso zeigt die Druckplatte 1 Öffnungen 8, die in diesem Fall rund ausgeführt sind. Das Netzblech 4 weist zwischen seinen axial verlaufenden Stegen 7, also den Stegen 7 in Umfangsrichtung der Krümmung folgend, abschnittsweise leichte Materialverdünnungen 21 auf, um eine leichte Knickung des Netzblechs 4 zum Ausbilden der Krümmung zu ermöglichen. Dies ist vor allem bei dickeren Netzblechen 4 von Vorteil, deren Dicke ungefähr der Dicke der Druckplatten entspricht oder noch dicker ausgeführt sind.

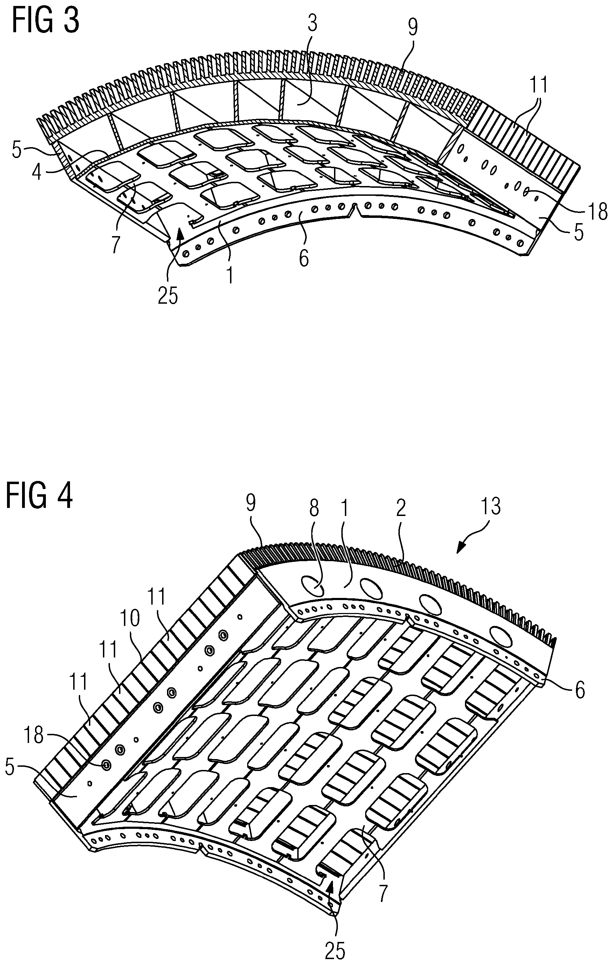

FIG 3 zeigt in einem Querschnitt eines Statorsegments die Anordnung des Blechpakets 9 auf den leistenförmigen Elementen bzw. Rippen 3 und zwischen den Druckplatten 1, als auch die Fixierung der Rippen 3 auf den axial verlaufenden Stegen 7 des Netzbleches 4. Ebenso ist die Anordnung des Flansches 6 der Druckplatte 1 zu sehen, mit denen die Statorsegmente 13 an weiteren Befestigungselementen einer nicht näher dargestellten Lagereinheit 16 oder Stützstruktur 22 fixierbar sind.

Das Netzblech 4 weist in zumindest einer Ecke eine offene Masche 25 auf, um u.a. die bei den Schweißvorgängen auftretenden Kräfte besser kompensieren zu können.

FIG 4 zeigt in einer weiteren perspektivischen Darstellung ein Statorsegment 13 ohne das Wicklungssystem, wobei durch die Druckplatte 1 als auch durch Druckfinger 2 das axial geschichtete Blechpaket 9 fixiert, positioniert und paketiert wird. Das Blechpaket 9 ist in dieser Darstellung durch axiale Aneinanderreihung von Teilblechpaketen 11 aufgebaut. Zwischen den Teilblechpaketen 11 entstehen durch Beabstandung dieser Teilblechpakete 11 radiale Kühlschlitze 10, die eine Kühlung des Statorsegments 13 und dadurch des Stators im Betrieb des Generators oder Motors ermöglicht. Die Beabstandung erfolgt durch radial verlaufende Zwischenelemente die bei der Paketierung des Blechpakets 9 eingesetzt werden.

Das axial geschichtete Blechpaket 9 des Statorsegments 13 kann alternativ auch durch die Druckplatte 1 und eine Verklebung mittels Backlack der ersten bzw. letzten Bleche des Blechpakets 9 fixiert, positioniert und paketiert werden, so dass dann nicht zwangsläufig Druckfinger 2 vorhanden sein müssen. Dabei werden jeweils drei bis ca. 20 Bleche mit Backlack versehen. Bei einigen Ausführungen kann dies die Herstellung eines Statorsegments 13 vereinfachen.

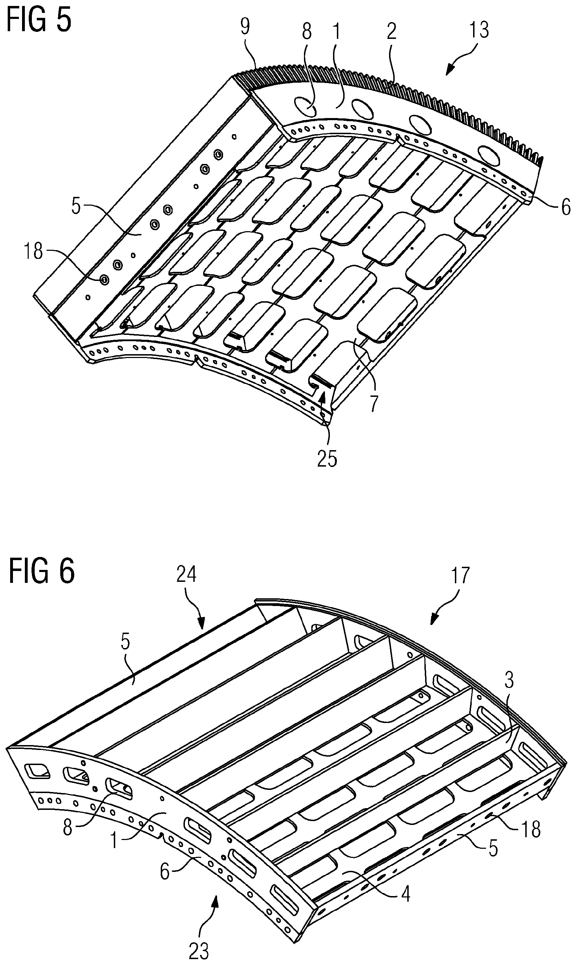

FIG 5 zeigt in einer weiteren perspektivischen Darstellung ein Statorsegment 13 ohne das Wicklungssystem, wobei durch die Druckplatte 1 als auch durch Druckfinger 2 das axial geschichtete Blechpaket 9 fixiert, positioniert und paketiert wird. Das Blechpaket 9 ist in dieser Darstellung als einstückiges Blechpaket 9 ausgebildet, das keine radial verlaufenden Abstandshalter aufweist, die Kühlschlitze 10 zwischen den Teilblechpaketen 11 bilden.

FIG 6 zeigt in perspektivischer Darstellung die Tragstruktur 17, bei der die Rippen 3 "über" die Maschen des Netzblechs 4 laufen. Mit anderen Worten, die Rippen 3, die von einer Seite des Blechpakets 9, also von einer Druckplatte 1 zur anderen Druckplatte 1 verlaufen, weisen nur bei auf den tangential verlaufen Stegen Kontaktpunkte mit dem Netzblech 4 auf. Nur dort findet demnach eine Verbindung zwischen den Rippen 3 und dem Netzblech 4, insbesondere den tangential verlaufenden Stegen statt. Bei der Verbindung handelt es sich vorzugsweise um eine Schweißverbindung.

Die Schweißverbindungen sind bei den vorgestellten Ausführungen vorzugsweise punktuell oder linienförmig ausgeführt.

In einer möglichen Ausführung ist die Dicke der nahezu quaderförmig ausgeführten Leisten bzw. Leistenelemente bzw. Rippen aber auch des Netzbleches dabei ungefähr doppelt so dick wie die Druckplatten 1 oder Teilfugenplatten 5.

In einer weiteren möglichen Ausführung ist die Dicke der nahezu quaderförmig ausgeführten Leisten bzw. Leistenelemente bzw. Rippen 3, aber auch des Netzbleches 4 ungefähr gleich der Dicke von Druckplatten 1 oder Teilfugenplatten 5.

Diese "Dickenausführungen" hängen u.a. von den möglichen zu erwartenden mechanischen Belastungen im Betrieb der Windkraftanlage ab.

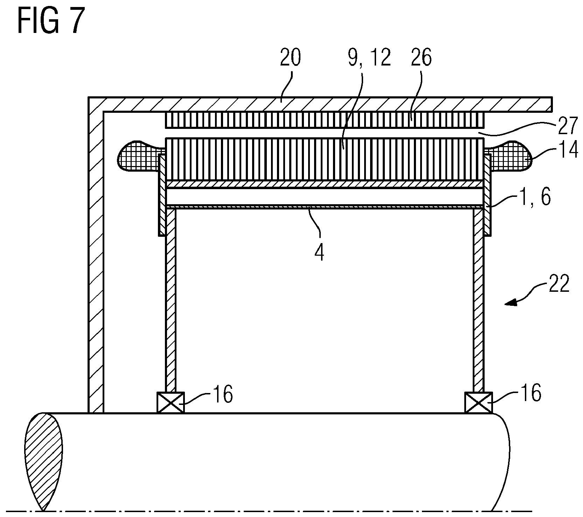

FIG 7 zeigt in einem prinzipiellen Längsschnitt die Anordnung des Stators 12 auf einer Lagereinheit 16. Ebenso zeigt diese Darstellung den Rotor 20 als Außenläufer des Generators, der zum Luftspalt 27 der dynamoelektrischen Maschine gewandt Permanentmagnete 26 aufweist. Das dabei prinzipiell dargestellt Ein- oder Zweischicht-Wicklungssystem 14 kann dabei aus Formspulen gleicher oder ungleicher Spulenweite ausgeführt sein. Ebenso kann es sich dabei um gesehnte Wicklungen, als auch um Schleifenwicklungen handeln. Vorzugsweise wird jedes Statorsegment 13 mit seinem kompletten Wicklungssystem 14 geliefert und auf der Baustelle zu einem Stator 12 elektrisch verbunden.

Ein derartiger Aufbau eignet sich nicht nur für Windkraftgeneratoren, ebenso ist die Tragstruktur 17 auch als Basis für große Motoren bei Antrieben z.B. in der Rohstoffindustrie geeignet.

## Patentansprüche

1. Tragstruktur (17) eines Blechpakets (9) eines Statorsegments (13) einer dynamoelektrischen Maschine mit Außenläufer mit
- zwei Teilfugenplatten (5) und zwei gekrümmt ausgeführten Druckplatten (1), die sich jeweils mit ihren Längsseiten gegenüber liegen, einen vorgebbaren Raum umgreifen und an ihren Stoßkanten verbindbar sind,
- im Wesentlichen radialen ausgerichteten Leisten bzw. Rippen (3) zwischen den Druckplatten (1),
- zumindest einem Element mit polygonförmigen Ausnehmungen, das mit einer Längsseite der Rippen (3) verbunden ist und eine Basisplatte der Tragstruktur (17) bildet.

2. Tragstruktur (17) nach Anspruch 1, **dadurch gekennzeichnet, dass** das Element aus Blech ist.

3. Tragstruktur (17) nach Anspruch 1 oder 2, **dadurch gekennzeichnet, dass** das Element eine netzartige Struktur aufweist und als Netzblech (4) ausgebildet ist.

4. Tragstruktur (17) nach einem oder mehrerer der vorhergehenden Ansprüche, **dadurch gekennzeichnet, dass** das Element als Netzblech (4) ausgeführt ist, dessen Maschenweite dem Abstand der Rippen (3) oder dessen Maschenweite einem ganzzahligen Vielfachen des Abstand der Rippen (3) entspricht.

5. Statorsegment (13) einer dynamoelektrischen Maschine mit einer Tragstruktur (17) nach einem oder mehreren der vorhergehenden Ansprüche, wobei die Druckplatten (1) zusammen mit radial angeordneten Druckfingern (2) an den Stirnseiten eines Blechpakets (9) dieses Blechpaket (9) axial fixieren.

6. Statorsegment (13) einer dynamoelektrischen Maschine mit einer Tragstruktur (17) nach einem oder mehreren der vorhergehenden Ansprüche 1 bis 4, wobei eine axiale Fixierung des Blechpakets (9) durch Druckplatten (1) und durch eine Verklebung der letzten bzw. ersten Bleche des Blechpakets (9) durch Backlack erfolgt.

7. Stator (12) einer dynamoelektrischen Maschine mit Statorsegmenten (13) nach Anspruch 5 oder 6, **dadurch gekennzeichnet, dass** die Statorsegmente (13) in Umfangsrichtung betrachtet mechanisch zumindest mit benachbart anordenbaren Teilfugenplatten (1) eines weiteren Statorsegments (13) verbunden sind.

8. Stator (12) nach Anspruch 7, **dadurch gekennzeichnet, dass** die Statorsegmente (13) über die Teilfugenplatten (5) und/oder durch eine über die Statorsegmente (13) ersteckende Stützstruktur (22) miteinander verbunden sind.

9. Außenläufergenerator oder Außenläufermotor mit einem Stator (12) nach Anspruch 7 oder 8, wobei der Rotor Permanentmagnete (26) aufweist.

10. Windkraftanlage mit einem Außenläufergenerator nach Anspruch 9.

11. Herstellverfahren eines Statorsegments (13) nach Anspruch 5 oder 6 durch folgende Schritte:
- Bereitstellen einer Tragstruktur (17), die Teilfugenplatten (5), Rippen (3) und Druckplatten (1) aufweist, die auf einer Längsseite der Rippen (3) durch ein polygonförmiges Element, insbesondere ein Netzblech (4) miteinander verbunden werden,
- anordnen eines vorpaketierten Blechpakets (9) des Statorsegments (13) auf der Tragstruktur (17) auf der dem Netzblech (4) abgewandten Seite der Leisten (3),
- Einsetzen eines Wicklungssystems, insbesondere Spulenwicklungssystems in die Nuten des Blechpakets (9) des Statorsegments (13).

12. Herstellverfahren eines Stators (12) nach Anspruch 7 oder 8 durch folgende Schritte:
- Zusammensetzen einzelner Statorsegmente (13), indem die Statorsegmente (13) über ihre Teilfugenbleche (5) und/oder durch eine über die Statorsegmente (13) ersteckende Stützstruktur (22) miteinander verbunden werden,
- elektrische Verbindung des Wicklungssystems der einzelnen Spulen der Statorsegmente (13) untereinander und mit zumindest einem Umrichter.
